# EUROPÄISCHE PATENTSCHRIFT

(11) **EP 2 787 171 B1**
(45) Veröffentlichungstag und Bekanntmachung des Hinweises auf die Patenterteilung: **22.06.2016**
(21) Anmeldenummer: 14175824.3
(22) Anmeldetag: 02.08.2012
(51) Int. Cl.: F01D 5/14

(54) **Schaufelgitter mit Seitenwandkonturierung und Strömungsmaschine**
Blade grid with side wall contours and turbomachine
Grille d'aubes avec définition de contour de la paroi latérale et turbomachine

(43) Veröffentlichungstag der Anmeldung: 08.10.2014
(62) Teilanmeldung aus: 12179045.5
(73) Patentinhaber: MTU Aero Engines AG, 80995 München (DE)
(72) Erfinder: Dr. Engel, Karl, 85221 Dachau (DE)

(56) Entgegenhaltungen:
- EP-A1- 2 136 033
- EP-A1- 2 187 000
- DE-A1-102008 021 053
- FR-A1- 2 928 174
- US-A1- 2007 258 818
- US-A1- 2011 044 818
- US-A1- 2011 064 580

## Beschreibung

Die Erfindung betrifft ein Schaufelgitter für eine Strömungsmaschine nach dem Oberbegriff des Patentanspruchs 1 und eine Strömungsmaschine.

Eine durch einen Strömungskanal geführte Fluidströmung wird durch einen seitlichen Druckgradienten parallel zur Seitenwandung abgelenkt. Da wandnahe Strömungsschichten aufgrund ihrer geringen Geschwindigkeit stärker als wandferne Strömungsschichten abgelenkt werden, wird eine Sekundärströmung gebildet, die einer Hauptströmung überlagert ist. Dies führt unter anderem zu Druckverlusten. Die Sekundärströmungen treten regelmäßig in Schaufelgittern von Strömungsmaschinen wie Gas- und Dampfturbinen auf. Die Schaufelgitter bestehen aus einer Vielzahl von in Umfangsrichtung nebeneinander angeordneten Schaufeln bzw. Schaufelblättern, die in einem rotationssymmetrischen Strömungskanal angeordnet sind und zwischen denen jeweils ein Schaufelkanal ausgebildet ist, in dem die Sekundärströmungen entstehen. Die Schaufelkanäle sind in Radialrichtung jeweils von einer radial äußeren gehäuseseitigen Seitenwandung bzw. äußeren Begrenzungswand und von einer radial inneren nabenseitigen Seitenwandung bzw. inneren Begrenzungswand begrenzt. Gebildet werden die Begrenzungswände durch einen feststehenden Gehäuseabschnitt, durch einen Rotorabschnitt, durch radial innere Schaufeldeckplatten und/oder durch radial äußere Schaufeldeckplatten. In Umfangsrichtung sind die Schaufelkanäle jeweils durch eine Druckseitenwandung und eine Saugseitenwandung der benachbarten Schaufeln begrenzt. Zur Verringerung der Sekundärströmungen bzw. Kanalwirbel werden in die Seitenwandungen häufig nicht-axialsymmetrische Konturierungen in Form von Erhebungen und/oder Vertiefungen eingebracht.

Aus dem Stand der Technik ist eine Vielzahl von nicht-axialsymmetrischen Seitenwandkonturierungen bekannt. So wird beispielsweise in der internationalen Patentanmeldung WO 2010/068391 vorgeschlagen, eine saugseitige Vertiefung im Bereich einer Saugseitenwandung vorzusehen, die sich stromaufwärts einer Schaufelanströmkante erstreckt. Zudem weist diese Seitenwandkonturierung eine vordere druckseitige Erhebung auf, die sich entlang der Druckseitenwandung erstreckt. Diese bekannte Seitenwandkonturierung führt zwar zu einer Reduzierung der Sekundärströmungen, weist jedoch noch ein erhebliches Verbesserungspotenzial auf.

Ferner ist aus der EP 2 136 033 A1 ein Schaufelgitter gemäß dem Oberbegriff von Anspruch 1 bekannt.

Aufgabe der Erfindung ist es, ein Schaufelgitter für eine Strömungsmaschine mit einer reduzierten Sekundärströmung zu schaffen. Des Weiteren ist es Aufgabe der Erfindung, eine Strömungsmaschine mit einem verbesserten Wirkungsgrad zu schaffen.

Diese Aufgabe wird gelöst durch ein Schaufelgitter mit den Merkmalen des Patentanspruchs 1 und durch eine Strömungsmaschine mit den Merkmalen des Patentanspruchs 8.

Ein erfindungsgemäßes Schaufelgitter einer Strömungsmaschine hat zumindest einen Schaufelkanal, der in Umfangsrichtung von einer Druckseitenwandung eines Schaufelblattes und von einer gegenüberliegenden Saugseitenwandung eines benachbarten Schaufelblattes begrenzt ist. In Radialrichtung ist der Schaufelkanal von zwei gegenüberliegenden Begrenzungswänden begrenzt. In Richtung einer Hauptströmung ist der Schaufelkanal von Anströmkanten und von Abströmkanten der Schaufelblätter begrenzt. Zumindest an einer der Begrenzungswände sind zumindest eine saugseitige Vertiefung und zumindest eine druckseitige Erhebung angeordnet. Erfindungsgemäß ist die saugseitige Vertiefung in Umfangsrichtung von der Saugseitenwandung beabstandet und mit einem Abschnitt stromauf und mit einem Abschnitt stromab der Anströmkanten angeordnet. Zudem geht erfindungsgemäß die druckseitige Erhebung in die Druckseitenwandung über und ist in einem vorderen Schaufelblattbereich angeordnet. Ferner ist erfindungsgemäß eine druckseitige Vertiefung vorgesehen, die stromauf der druckseitigen Erhebung angeordnet ist.

Das erfindungsgemäße Schaufelgitter hat eine nicht-axialsymmetrische Seitenwandkonturierung. Durch die Seitenwandkonturierung wird ein statisches Druckfeld an der zumindest einen Begrenzungswand und an den gegenüberliegenden Schaufelblattwandungen im Randbereich so beeinflusst, dass eine Sekundärströmung reduziert wird. Hierdurch werden Strömungsverluste verringert und eine Zuströmung auf ein nachfolgendes Schaufelgitter wird verbessert. Bevorzugterweise sind die zumindest eine saugseitige Vertiefung, die zumindest eine druckseitige Erhebung und die druckseitige Vertiefung durch nicht-konturierte Begrenzungswandabschnitte voneinander beabstandet. Hierdurch sind die Vertiefungen und die Erhebung lokal ausgebildet und gehen nicht ineinander über.

Bevorzugterweise erstreckt sich die zumindest eine saugseitige Vertiefung bis zur größten Krümmung der Saugseitenwandung.

Die zumindest eine saugseitige Vertiefung hat einen tiefsten Abschnitt, der sich stromaufwärts und stromabwärts der Anströmkanten erstreckt.

Die zumindest eine druckseitige Erhebung kann stromabwärts entlang der Druckseitenwandung über die saugseitige Vertiefung hinausgeführt sein, wobei ihr höchster Abschnitt bevorzugterweise stromaufwärts bis an die Anströmkante herangeführt ist.

Die zumindest eine druckseitige Erhebung hat einen höchsten Abschnitt und die zumindest eine saugseitige Vertiefung hat einen tiefsten Abschnitt, der jeweils als ein Plateau ausgebildet sein kann, wobei bevorzugterweise der höchste Abschnitt eine größere Plateaufläche als der tiefste Abschnitt hat.

Dabei wird es bevorzugt, wenn der tiefste Abschnitt und der höchste Abschnitt jeweils an einer radialen Position liegen, deren Beträge gleich sind.

Die zumindest eine saugseitige Vertiefung und die druckseitige Vertiefung beginnen in Strömungsrichtung in etwa an einer gleichen Axialposition.

Die druckseitige Vertiefung ist erfindungsgemäß in etwa trichterförmig und hat einen tiefsten Abschnitt, der radial außen zum tiefsten Abschnitt der saugseitigen Vertiefung angeordnet ist.

Bevorzugterweise ist stromab der zumindest einen saugseitigen Vertiefung zumindest eine saugseitige Erhebung an der Saugseitenwandung vorgesehen.

Die zumindest eine druckseitige Erhebung und die zumindest eine saugseitige Erhebung können in Umfangsrichtung betrachtet ineinander übergehen und stromabwärts etwa an gleichen axialen Positionen enden.

Bevorzugterweise liegt der höchste Abschnitt der zumindest einen druckseitigen Erhebung radial außen zum höchsten Abschnitt der zumindest einen saugseitigen Erhebung und ist flächenmäßig größer als der höchste Abschnitt der zumindest einen saugseitigen Erhebung.

Vorzugsweise ist zumindest die innere Begrenzungswand stromauf der Vertiefungen und stromab der Abströmkanten nicht-konturiert ausgebildet.

Eine bevorzugte Strömungsmaschine hat zumindest ein erfindungsgemäßes Schaufelgitter. Aufgrund der reduzierten Sekundärströmungen bzw. Kanalwirbel weist eine derartige Strömungsmaschine einen verbesserten Wirkungsgrad gegenüber einer Strömungsmaschine mit einem herkömmlichen Schaufelgitter auf.

Sonstige vorteilhafte Ausführungsbeispiele der Erfindung sind Gegenstand weiterer Unteransprüche.

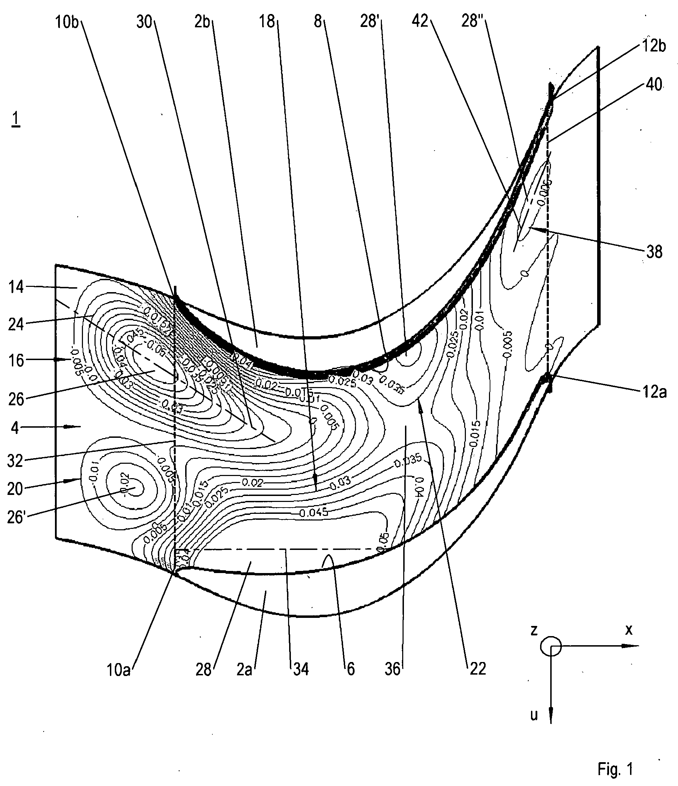

Im Folgenden wird ein bevorzugtes Ausführungsbeispiel der Erfindung anhand einer schematischen Darstellung näher erläutert. Die einzige Figur 1 zeigt eine Draufsicht auf ein abgewickeltes erfindungsgemäßes Schaufelgitter im Bereich eines Schaufelkanals.

Wie in der einzigen Figur 1 gezeigt, hat ein beispielhaftes erfindungsgemäßes Schaufelgitter 1 eine Vielzahl von Schaufelblättern 2a, 2b, die in Umfangsrichtung unebeneinander angeordnet sind und jeweils einen Schaufelkanal 4 begrenzen. Das Schaufelgitter 1 ist bevorzugterweise ein Schaufelgitter einer axialen Strömungsmaschine wie ein Flugzeugtriebwerk oder eine stationäre Gasturbine. Beispielsweise ist das Schaufelgitter in der Niederdruckturbine der Strömungsmaschine angeordnet. Die Erfindung findet jedoch auch Anwendung bei Schaufelgittern für Verdichter in Axialbauweise oder für Verdichter sowie Turbinen in Radial- und Diagonalbauweise.

Das Schaufelgitter 1 wird von links nach rechts in Axialrichtung x von einer Hauptströmung durchströmt, wobei die Hauptströmung in den Schaufelkanälen 4 in Umfangsrichtung u entsprechend umgelenkt wird. Der Einfachheit halber wird im Folgenden die Axialrichtung x als Strömungsrichtung betrachtet.

In Umfangsrichtung u wird jeder Schaufelkanal 4 von einer Druckseitenwandung 6 des ersten Schaufelblattes 2a und von einer gegenüberliegenden Saugseitenwandung 8 des zweiten Schaufelblattes 2b gebildet, die sich jeweils zwischen einer Anströmkante 10a, 10b und einer Abströmkante 12a, 12b der Schaufelblätter 2a, 2b erstrecken. In Axialrichtung x und somit in Strömungsrichtung wird jeder Schaufelkanal 4 von den Anströmkanten 10a, 10b und den Abströmkanten 12a, 12b begrenzt. In Radialrichtung z wird jeder Schaufelkanal 4 von einer nabenseitigen Seitenwandung bzw. inneren Begrenzungswand 14 begrenzt. Zudem wird jeder Schaufelkanal 4 in Radialrichtung z von einer nicht dargestellten gehäuseseitigen Seitenwandung bzw. äußeren Begrenzungswand begrenzt, die aufgrund der Schnittansicht nicht dargestellt ist. Die innere Begrenzungswand 14 wird beispielsweise von einem Rotorabschnitt oder einer schaufelfußseitigen Plattform bzw. einem inneren Deckband gebildet. Die äußere nicht dargestellte Begrenzungswand wird beispielsweise von einem Gehäuseabschnitt oder einem schaufelblattspitzenseitigen äußeren Deckband gebildet und kann wie die innere Begrenzungswand 14 gestaltet sein.

Zumindest die innere Begrenzungswand 14 ist mit einer nicht-axialsymmetrischen Seitenwandkonturierung in Form einer saugseitigen Vertiefung 16 sowie einer druckseitigen Erhebung 18 gebildet. Zudem umfasst die Seitenwandkonturierung eine druckseitige Vertiefung 20 und eine saugseitige Erhebung 22. Die Vertiefungen 16, 20 und die Erhebungen 18, 22 sind zeichnerisch durch eine Vielzahl von Tiefen- bzw. Höhenlinien 24 mit einem Minuszeichen als tiefsten Abschnitt 26, 26' oder mit einem Pluszeichen als höchsten Abschnitt 28, 28' dargestellt. Stromauf der Vertiefungen 16, 20 und stromab der Abströmkanten 12a, 12b ist die innere Begrenzungswand 14 nicht-konturiert ausgebildet, sondern folgt einem ursprünglichen Verlauf.

Die saugseitige Vertiefung 16 ist ein sich radial nach innen erstreckender Abschnitt der inneren Begrenzungswand 14. Die saugseitige Vertiefung 16 ist im vorderen Bereich des Schaufelblattes 2b angeordnet und durch einen schmalen nicht-konturierten Flächenabschnitt der inneren Begrenzungswand 14 von der Saugseitenwandung 8 des Schaufelblattes 2a beabstandet. Sie hat eine längliche Erstreckung und ist derart zur Saugseitenwandung 8 ausgerichtet, dass ihre Längsachse 30 in etwa tangential zum benachbarten Saugseitenwandungsabschnitt verläuft, wobei sie zu diesem in den Schaufelkanal 4 hinein versetzt ist. Die saugseitige Vertiefung 16 erstreckt sich in Strömungsrichtung bzw. in Axialrichtung x von einem Bereich vor den Anströmkanten 10a, 10b bis in etwa in einen Kanalbereich einer größten Saugseitenwandkrümmung. Somit ist sie mit einem Abschnitt stromauf und mit einem Abschnitt stromab der Anströmkanten 10a, 10b angeordnet. Ihr tiefster Abschnitt 26 liegt auf einer die Anströmkanten 10a, 10b miteinander verbindenden virtuellen Umfangslinie 32 und erstreckt sich somit stomaufwärts und stromabwärts der Anströmkanten 10a, 10b. Vorzugsweise verläuft eine Wandung der saugseitigen Vertiefung 16 stromauf des tiefsten Abschnittes 26 steiler als stromab des tiefsten Abschnittes 26. Ausgehend vom nicht-konturierten Flächenabschnitt der inneren Begrenzungswand 14 liegt ihr tiefster Abschnitt 26 auf einer radial inneren Position von etwa-0,05 mm.

Die druckseitige Erhebung 18 ist ein sich radial nach außen erstreckender Abschnitt der inneren Begrenzungswand 14. Die druckseitige Erhebung 18 erstreckt sich im Wesentlichen von der Anströmkante 10b des Schaufelblattes 2a entlang der Druckseitenwandung 6. Sie ist über einen nicht konturierten Flächenabschnitt der inneren Begrenzungswand 14 von der saugseitigen Vertiefung 16 beabstandet. Die druckseitige Erhebung 18 hat eine längliche Erstreckung und ist derart orientiert, dass sie mit ihrer Längsachse 34 in etwa parallel zur Axialrichtung x verläuft. Ihr höchster Abschnitt 28 erstreckt sich in etwa von der Anströmkante 10b bis zur axialen Schaufelblattmitte. Ausgehend vom nicht-konturierten Flächenabschnitt der inneren Begrenzungswand 14 liegt der höchste Abschnitt 28 auf einer radial äußeren Position von etwa + 0,05 mm. Somit sind die Beträge der radialen Positionen des tiefsten Abschnitts 26 der saugseiten Vertiefung 16 und der radialen Position des höchsten Abschnitts 28 gleich groß. Vorzugsweise hat der höchste Abschnitt 28 eine Flächenerstreckung, die in etwa 4- bis 6-mal so groß wie eine Flächenerstreckung des tiefsten Abschnittes 26 ist.

Die druckseitige Vertiefung 20 ist ein sich radial nach innen erstreckender Abschnitt der inneren Begrenzungswand 14. Sie ist in Umfangsrichtung U neben der saugseitigen Vertiefung 16 und in Axialrichtung x stromauf der druckseitigen Erhebung 18 angeordnet. Sie ist über jeweils einen nicht-konturierten Flächenabschnitt von diesen Einzelkonturierungen 16, 18 beabstandet. Insbesondere beginnt die druckseitige Vertiefung 20 in Strömungsrichtung betrachtet etwa an der gleichen axialen Position wie die saugseitige Vertiefung 16. Die druckseitige Vertiefung 20 verjüngt sich ausgehend von der inneren Begrenzungswand 14 in Richtung seines tiefsten Abschnittes 26' etwa trichterförmig, wobei ihre trichterförmige Wandung stromab des tiefsten Abschnittes 26' steiler ist als stromauf des tiefsten Abschnittes 26'. Ausgehend vom nicht-konturierten Flächenabschnitt der inneren Begrenzungswand 14 liegt ihr tiefster Abschnitt 26' auf einer radial inneren Position von etwa - 0,02 mm. Somit liegt der tiefste Abschnitt 26' der druckseitigen Vertiefung 20 radial außen zum tiefsten Abschnitt 26 der saugseitigen Vertiefung 16.

Die saugseitige Erhebung 22 ist ein sich radial nach außen erstreckender Abschnitt der inneren Begrenzungswand 14, der sich in Richtung seines höchsten Abschnittes 28' kegelförmig verjüngt. Sie ist stromab einer maximalen druckseitigen Krümmung des Schaufelblattes 2b und somit stromab der saugseitigen Vertiefung 16 unmittelbar an der Saugseitenwandung 8 angeordnet. Bevorzugterweise ist sie im Bereich einer Engstelle zwischen den Schaufelblättern 2a, 2b angeordnet. Der höchste Abschnitt 28' geht unmittelbar in die Saugseitenwandung 8 über und liegt ausgehend von einem nicht-konturierten Flächenabschnitt der inneren Begrenzungswand 14 auf einer radial äußeren Position von etwa + 0,04 mm. Somit ist der höchste Abschnitt 28' der saugseitigen Erhebung 22 radial innen zum höchsten Abschnitt 28 der druckseitigen Erhebung 18 angeordnet. Zudem ist der höchste Abschnitt 28' der saugseitigen Erhebung 22 flächenmäßig kleiner als der höchste Abschnitt 28 der druckseitigen Erhebung 18. Die saugseitige Erhebung 22 geht in Umfangsrichtung u über einen Verbindungsabschnitt 36 in die saugseitige Erhebung 18 über und endet stromabwärts in etwa an der gleichen axialen Position wie die druckseitige Erhebung 18. Der Verbindungsabschnitt 36 ist gegenüber einem nicht-konturierten Flächenabschnitt der inneren Begrenzungswand 14 erhöht, jedoch gegenüber den höchsten Abschnitten 28, 28' der Erhebungen 18, 22 als Tal ausgebildet. Ausgehend von einem nicht-konturierten Flächenabschnitt der inneren Begrenzungswand 14 befindet sich der Verbindungsbereich 36 in etwa auf einer radialen Position von + 0,03 mm.

Des Weiteren umfasst die Seitenwandkonturierung eine zweite saugseitige Erhebung 38, die zwischen der ersten saugseitigen Erhebung 22 und den Abströmkanten 12a, 12b bzw. einer virtuellen Umfangslinie 40 zwischen den Abströmkanten 12a, 12b angeordnet ist. Die zweite bzw. hintere saugseitige Erhebung 38 ist von einem nicht-konturierten Flächenabschnitt der Begrenzungswand 14 umgeben und somit von der Saugseitenwandung 8 beabstandet. Sie ist ein sich radial nach außen erstreckender Abschnitt der inneren Begrenzungswand 14 und hat eine längliche Erstreckung. Bevorzugterweise ist sie mit ihrer Längsachse 42 in etwa tangential zum benachbarten Seitenwandungsabschnitt orientiert, wobei sie zu diesem in den Schaufelkanal 4 hinein versetzt ist. Ausgehend vom nicht-konturierten Flächenabschnitt der inneren Begrenzungswand 14 liegt ihr höchster Abschnitt 28" auf einer radial äußeren Position von etwa + 0,005 mm. Somit ist der höchste Abschnitt 28" der hinteren saugseitigen Erhebung 38 radial innen zu den höchsten Abschnitten 28, 28' der druckseitigen Erhebung 18 und der vorderen saugseitigen Erhebung 22 angeordnet.

Es sei erwähnt, dass die angegebenen radialen Positionen bzw. Werte wie - 0,05 mm und + 0,05 mm lediglich Beispielpositionen bzw. Beispielwerte sind. Die radialen Einzelkonturierungen 16, 18, 20, 22, 38 können selbstverständlich andere radiale positive bzw. negative Erstreckungen aufweisen ohne den Schutzbereich der Erfindung zu verlassen.

Offenbart ist ein Schaufelgitter einer Strömungsmaschine mit einer nicht-axialsymmetrischen Seitenwandkonturierung, wobei die Seitenwandkonturierung zumindest eine saugseitige Vertiefung aufweist, die in Umfangsrichtung von einer Saugseitenwandung beabstandet ist und mit einem Abschnitt stromauf und mit einem Abschnitt stromab der Anströmkanten angeordnet angeordnet ist, eine druckseitige Erhebung, die in eine Druckseitenwandung übergeht und in einem vorderen Schaufelblattbereich angeordnet ist, sowie eine druckseitige Vertiefung aufweist, die stromauf der druckseitigen Erhebung angeordnet ist, sowie eine Strömungsmaschine mit einem derartigen Schaufelgitter.

### Bezugszeichenliste

- 1: Schaufelgitter
- 2a, b: Schaufelblatt
- 4: Schaufelkanal
- 6: Druckseitenwandung
- 8: Saugseitenwandung
- 10a, b: Anströmkante
- 12a, b: Abströmkante
- 14: innere Begrenzungswand
- 16: saugseitige Vertiefung
- 18: druckseitige Erhebung
- 20: druckseitige Vertiefung
- 22: (vordere) saugseitige Erhebung
- 24: Höhen-/Tiefenlinie
- 26, 26': tiefster Abschnitt
- 28, 28', 28": höchster Abschnitt
- 30: Längsachse saugseitige Vertiefung
- 32: virtuelle Umfangslinie Anströmkanten
- 34: Längsachse druckseitige Erhebung
- 36: Verbindungsabschnitt
- 38: (hintere) saugseitige Erhebung
- 40: virtuelle Umfangslinie Abströmkanten
- 42: Längsachse (hintere) saugseitige Erhöhung

- z: Radialrichtung
- u: Umfangsrichtung
- x: Strömungsrichtung/Axialrichtung

## Patentansprüche

1. Schaufelgitter (1) einer Strömungsmaschine, mit zumindest einem Schaufelkanal (4), der in Umfangsrichtung (u) von einer Druckseitenwandung (6) eines Schaufelblattes (2a) und von einer gegenüberliegenden Saugseitenwandung (8) eines benachbarten Schaufelblattes (2b) begrenzt ist, der in Radialrichtung (z) von zwei gegenüberliegenden Begrenzungswänden (14) begrenzt ist, und der in Richtung einer Hauptströmung von Anströmkanten (10a, 10b) und von Abströmkanten (12a, 12b) der Schaufelblätter (2a, 2b) begrenzt ist, wobei zumindest eine der Begrenzungswände (14) mit zumindest einer saugseitige Vertiefung (16) versehen ist und zumindest eine druckseitige Erhebung (18) aufweist, wobei die saugseitige Vertiefung (16) in Umfangrichtung (u) von der Saugseitenwandung (8) beabstandet ist und mit einem Abschnitt stromauf und mit einem Abschnitt stromab der Anströmkanten (10a, 10b) angeordnet ist, die druckseitige Erhebung (18) in die Druckseitenwandung (6) übergeht und in einem vorderen Schaufelblattbereich angeordnet ist, wobei eine druckseitige Vertiefung (20) vorgesehen ist, die stromauf der druckseitigen Erhebung (18) angeordnet ist, und wobei die saugseitige Vertiefung (16) einen tiefsten Abschnitt (26) hat, der sich stromaufwärts und stromabwärts der Anströmkanten (10a, 10b) erstreckt,
**dadurch gekennzeichnet, dass** die druckseitige Vertiefung (20) trichterförmig ist und ihr tiefster Abschnitt (26') radial außen zum tiefsten Abschnitt (26) der saugseitigen Vertiefung (16) angeordnet ist.

2. Schaufelgitter nach Anspruch 1, wobei sich die saugseitige Vertiefung (16) bis zur größten Krümmung der Saugseitenwandung (8) erstreckt.

3. Schaufelgitter nach einem der vorhergehenden Ansprüche, wobei stromabwärts die druckseitige Erhebung (18) entlang der Druckseitenwandung (6) über die saugseitige Vertiefung (16) hinaus geführt ist und ihr höchster Abschnitt (28) stromaufwärts bis an die Anströmkante (10a, 10b) herangeführt ist.

4. Schaufelgitter nach Anspruch3, wobei der höchste Abschnitt (28) der druckseitigen Erhebung (18) und der tiefste Abschnitt (26) der saugseitigen Vertiefung (16) als Plateaus ausgebildet sind, und wobei der höchste Abschnitt (28) eine größere Plateaufläche hat als der tiefste Abschnitt (26) hat.

5. Schaufelgitter nach Anspruch 3 oder 4, wobei der tiefste Abschnitt (26) und der höchste Abschnitt (28) jeweils an einer radialen Position liegen, deren Beträge gleich sind.

6. Schaufelgitter nach einem der vorhergehenden Ansprüche, wobei die Vertiefungen (16, 20) in Strömungsrichtung an einer gleichen Axialposition beginnen.

7. Schaufelgitter nach einem der vorhergehenden Ansprüche, wobei die innere Begrenzungswand (14) stromauf der Vertiefungen (16, 20) und stromab der Abströmkanten (12a, 12b) nicht-konturiert ausgebildet ist.

8. Strömungsmaschine mit zumindest einem Schaufelgitter (1) nach einem der vorhergehenden Ansprüche.

## Claims

1. A blade row (1) of a continuous-flow machine, having at least one blade channel (4) which is limited by a pressure-side wall (6) of a blade (2a) and by an opposite suction-side wall (8) of an adjacent blade (2b) in the circumferential direction (u), which is limited by two opposite partition walls (14) in the radial direction (z), and which is limited by leading edges (10a, 10b) and by trailing edges (12a, 12b) of the blades (2a, 2b) in the direction of a main flow, wherein at least one of the partition walls (14) is provided with at least one deepening (16) on the suction side and has at least one elevation (18) on the pressure side, wherein the deepening (16) on the suction side is spaced from the suction-side wall (8) in the circumferential direction (u) and is arranged with a section upstream and with a section downstream of the leading edges (10a, 10b), the elevation (18) on the pressure side passes into the pressure-side wall (6) and is arranged in a front blade area, wherein a deepening (20) on the pressure side is provided which is arranged upstream of the elevation (18) on the pressure side, and wherein the deepening (16) on the suction side has a deepest section (26) which extends upstream and downstream of the leading edges (10a, 10b),
**characterized in that** the deepening (20) on the pressure side is funnel-shaped and its deepest section (26') is arranged radially outside to the deepest section (26) of the deepening (16) on the suction side.

2. The blade row according to claim 1, wherein the deepening (16) on the suction side extends to the biggest curvature of the suction-side wall (8).

3. The blade row according to one of the preceding claims, wherein the elevation (18) on the pressure side is led downstream along the pressure-side wall (6) beyond the deepening (16) on the suction side and its highest section (28) is led upstream to the leading edge (10a, 10b).

4. The blade row according to claim 3, wherein the highest section (28) of the elevation (18) on the pressure side and the deepest section (26) of the deepening (16) on the suction side are formed as plateaus, and wherein the highest section (28) has a larger plateau area than the deepest section (26).

5. The blade row according to claim 3 or 4, wherein the deepest section (26) and the highest section (28) each lie at a radial position whose values are equal.

6. The blade row according to one of the preceding claims, wherein the deepenings (16, 20) begin in the flow direction at a same axial position.

7. The blade row according to one of the preceding claims, wherein the inner partition wall (14) is formed in a non-contoured way upstream of the deepenings (16, 20) and downstream of the trailing edges (12a, 12b).

8. A continuous-flow machine with at least one blade row (1) according to one of the preceding claims.

## Revendications

1. Grille d'aubes (1) d'une turbomachine, comportant au moins un canal d'aube (4) qui est délimité dans la direction circonférentielle (u) par une paroi côté pression (6) d'une ailette (2a) et par une paroi côté aspiration (8) opposée d'une ailette (2b) adjacente, qui est délimité dans la direction radiale (z) par deux parois de délimitation (14) opposées, et qui est délimité dans la direction d'un écoulement principal par des bords d'attaque (10a, 10b) et des bords de fuite (12a, 12b) des pales d'aube (2a, 2b), au moins une des parois de délimitation (14) étant pourvue d'au moins un évidement côté aspiration (16) et comportant au moins une saillie côté pression (18), l'évidement côté aspiration (16) étant espacé dans la direction circonférentielle (u) de la paroi côté aspiration (8) et étant disposé avec une partie en amont et une partie en aval des bords d'attaque (10a, 10b), la saillie côté pression (18) se transformant en la paroi côté pression (6) et étant disposée dans une zone d'ailette avant, un évidement côté pression (20) étant prévu qui est disposé en amont de la saillie côté pression (18), l'évidement côté aspiration (16) comporte une partie plus profonde (26) qui s'étend en amont et en aval des bords d'attaque (10a, 10b),
**caractérisée en ce que** l'évidement côté pression (20) a une forme d'entonnoir et sa partie la plus profonde (26') est située radialement à l'extérieur par rapport à la partie la plus profonde (26) de l'évidement côté aspiration (16).

2. Grille d'aubes selon la revendication 1, dans laquelle l'évidement côté aspiration (16) s'étend jusqu'à la plus grande courbure de la paroi côté aspiration (8).

3. Grille d'aubes selon l'une des revendications précédentes, dans laquelle en aval la saillie côté pression (18) est guidée le long de la paroi côté pression (6) au-delà de l'évidement côté aspiration (16) et sa partie la plus élevée (28) approche en amont du bord d'attaque (10a, 10b).

4. Grille d'aubes selon la revendication 3, la partie la plus élevée (28) de la saillie côté pression (18) et la partie la plus profonde (26) de l'évidement côté aspiration (16) sont configurées sous la forme de plateaux, et la partie la plus élevée (28) présente une face de plateau plus grande que la partie la plus profonde (26).

5. Grille d'aubes selon la revendication 3 ou 4, dans laquelle la partie la plus profonde (26) et la partie la plus élevée (28) sont toutes les deux situées à une position radiale dont les valeurs sont égales.

6. Grille d'aubes selon l'une des revendications précédentes, dans laquelle les évidements (16, 20) commencent à une même position axiale par référence à la direction d'écoulement.

7. Grille d'aubas selon l'une des revendications précédentes, dans laquelle la paroi de délimitation intérieure (14) en amont des évidements (16, 20) et en aval des bords de fuite (12a, 12b) est configurée de façon non-profilée.

8. Turbomachine comportant au moins une grille d'aubes (1) selon l'une des revendications précédentes.
